# EUROPEAN PATENT SPECIFICATION

(11) **EP 2 011 662 B1**
(45) Date of publication and mention of the grant of the patent: **07.07.2010**
(21) Application number: 07741550.3
(22) Date of filing: 12.04.2007
(51) Int. Cl.: B41M 5/337, B41M 5/30, B41M 5/44, G11B 7/252

(54) **OPTICAL RECORDING MEDIUM WITH A HEAT-SENSITIVE PRINTING LAYER**
OPTISCHES AUFZEICHNUNGSMEDIUM MIT EINER WÄRMEEMPFINDLICHEN DRUCKSCHICHT
SUPPORT D'ENREGISTREMENT OPTIQUE AVEC UNE COUCHE D'IMPRESSION THERMOSENSIBLE

(30) Priority: 14.04.2006 JP 2006111818
(43) Date of publication of application: 07.01.2009
(73) Proprietor: Mitsubishi Kagaku Media Co., Ltd., Tokyo 108-8415 (JP)
(72) Inventor: AKIYAMA, Masayoshi, Tokyo 108-8415 (JP); TAKESHIMA, Hideharu, Tokyo 108-8415 (JP)
(74) Representative: Vossius & Partner
(86) International application number: PCT/JP2007/058114
(87) International publication number: WO 2007/119801

(56) References cited:
- EP-A- 0 582 753
- WO-A1-2004/067289
- JP-A- 57 151 392
- JP-A- 2004 237 515

## Description

The present invention relates to an optical recording medium comprising a thermal printing layer.

In optical recording media including recordable media (Write Once media) such as CD-R and DVD-R, rewritable media (ReWritable Media) such as CD-RW and rewritable DVD, and the like (hereinafter sometimes referred to as "optical disks"), one side is a side on which a light for recording/reading information enters and another side is used as a printing/displaying side on which a title and the like are printed.
In the above optical disks, the above printing/displaying side is frequently used for recording contents of the information recorded on the optical disks. Specifically, the title of a movie or the like recorded on a DVD-R is described on the printing/displaying side of the DVD-R.

As one method for printing the title, there is a method of forming on the above printing/displaying side a thermal printing layer wherein an infrared absorbent, a leuco dye, and a developer are dissolved/dispersed in an ultraviolet curable resin. In the method, the infrared absorbent is heated by irradiating the above printing layer with a laser light (780 nm) and the leuco dye is reacted with the developer by an action of the heat to develop color of the thermal printing layer (to achieve printing).

As such a technology, Patent Document 1 may be mentioned. In the document, a fine paste obtained by adding a specific leuco dye into an ultraviolet curable resin in which an infrared absorbent and a developer are dissolved is screen-printed on a substrate and then cured to form an imaging medium of 7 µm. Then, by irradiating the imaging medium with a laser light, the infrared absorbent is heated and the leuco dye is reacted with the developer utilizing the heat, thereby printing being achieved (paragraphs 0008, 0010, 0011, 0016, Examples 1 and 2 of the Document).

Patent Document 1: U. S. Patent Application Laid-Open No. 2004/0146812

When an ultraviolet curable resin is used for a thermal printing layer on which printing of a title or the like is performed, an ink which forms the thermal printing layer should comprise a raw material before curing, so that a predetermined viscosity can be imparted to the ink. Accordingly, formation of the thermal printing layer can be achieved by screen printing. As a result, since an ink consumption is decreased and a drying step becomes unnecessary, productivity of the thermal printing layer can be improved.

However, when a leuco dye and a developer are present at the same time in the ultraviolet curable resin, the leuco dye is reacted with the developer to develop color of the thermal printing layer in some cases during a production process of the ink, screen printing, or a curing step. This is because there is a case where the leuco dye (heat-sensitive color development material) and the developer dissolve in the ultraviolet curable resin.

Actually, also in Patent Document 1, in order to prevent unexpected color development induced by a contact of the leuco dye with the developer, any one of the leuco dye and the developer is made undissolved (is made dispersed) in the ultraviolet curable resin (paragraph 0016, Examples 1 and 2 of Patent Document 1). Specifically, a specific leuco dye (chemical formula (8) or (10) of Patent Document 1), which does not dissolve in the ultraviolet curable resin, is employed.

However, there are a large number of heat-sensitive color development materials such as leuco dyes which dissolve in ultraviolet curable resins. Also, the situation is the same for developers. Accordingly, when a highly stable thermal printing layer where the above unexpected color development does not occur can be formed even if such heat-sensitive color development materials and developers are freely selected, a degree of freedom of material selection is improved, so that there is a possibility that thermal printing layers having a variety of printing properties can be formed.

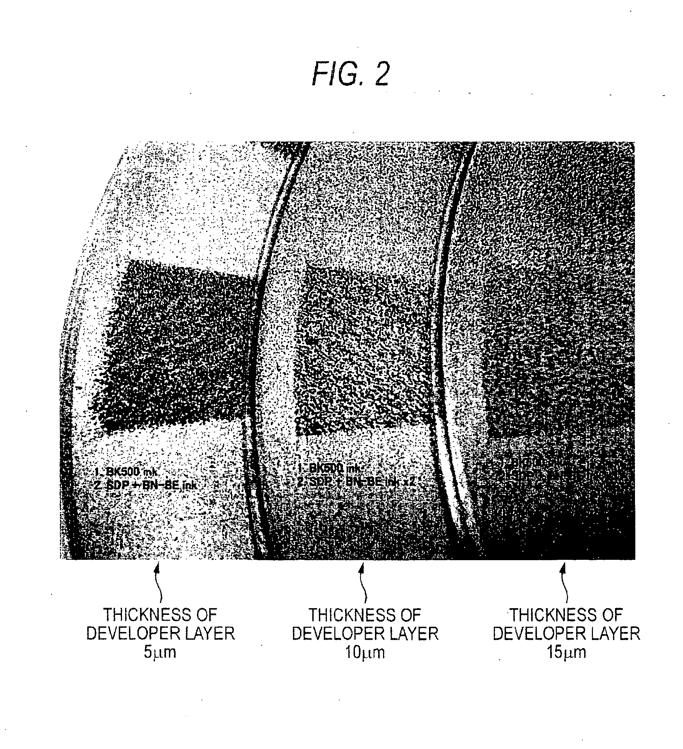

Moreover, in the printing method with a laser light as described in the above Patent Document 1, since printing is performed by scanning a spot of the laser light on a printing surface, it takes a long time to print a wide surface of a printing layer.
Instead or the above printing method with such a laser light, a method of performing thermal printing with a thermal head has been proposed (JP-A-2000-155989, FIG. 2). According to the method, it becomes possible to perform printing by one-round scanning on the thermal printing layer of an optical recording medium with a thermal head, so that there is a possibility of rapid print formation.

EP 0 582 753 A1 discloses an imaging element comprising on a support a dye precursor and a color developer arranged in the same layer or in separate layers, characterized in that a specific type of monomers and a photoinitiator is present in a layer containing said dye precursor and/or developer.

The invention has been devised in consideration of the above circumstances.
Namely, an object of the invention is firstly to provide an optical recording medium comprising a thermal printing layer capable of free material selection without considering solubility of a heat-sensitive color development material and a developer to a curable resin (particularly, ultraviolet curable resin) and materials thereof.
Moreover, an object of the invention is secondly to provide an optical recording medium comprising a thermal printing layer suitable for not thermal printing with a laser light but thermal printing with a thermal head.

As a result of the extensive studies in consideration of the above objects, the present inventors have found that the above objects can be achieved by separately forming a color former layer comprising a heat-sensitive color development material and a curable resin and a developer layer comprising a developer and a curable resin an the optical recording medium. Thus, they have accomplished the invention.

According to the invention, there is provided an optical recording medium comprising a thermal printing layer described below and a recording/reading functional layer for performing recording or reading with a light, wherein the optical recording medium has the thermal printing layer on a side of the recording/reading functional layer in which the side is opposite to a side on which the light enters.

The thermal printing layer is capable of thermal printing with a thermal head, and comprises a color former layer comprising a heat-sensitive color development material and a curable resin and a developer layer comprising a developer and a curable resin.
It is preferred that a sensitizer layer comprising a sensitizer is provided between the color former layer and the developer layer.
Furthermore, it is preferred that a sensitizer is contained in at least one of the color former layer and the developer layer.
Moreover, it is preferred that the curable resin contained in the color former layer and the curable resin contained in the developer layer are the same curable resin.
It is preferred that the curable resin is an ultraviolet curable resin.

According to the invention, the range of selection of materials usable for the thermal printing layer comprised by the above defined optical recording medium can be expanded. In particular, it is possible to provide a thermal printing layer capable of free material selection without considering solubility of a heat-sensitive color development material and a developer to a curable resin and starting monomers thereof. Furthermore, it is possible to provide a thermal printing layer suitable for not thermal printing with a laser light but thermal printing with a thermal head.

### Brief Description of the Drawings

[FIG. 1]

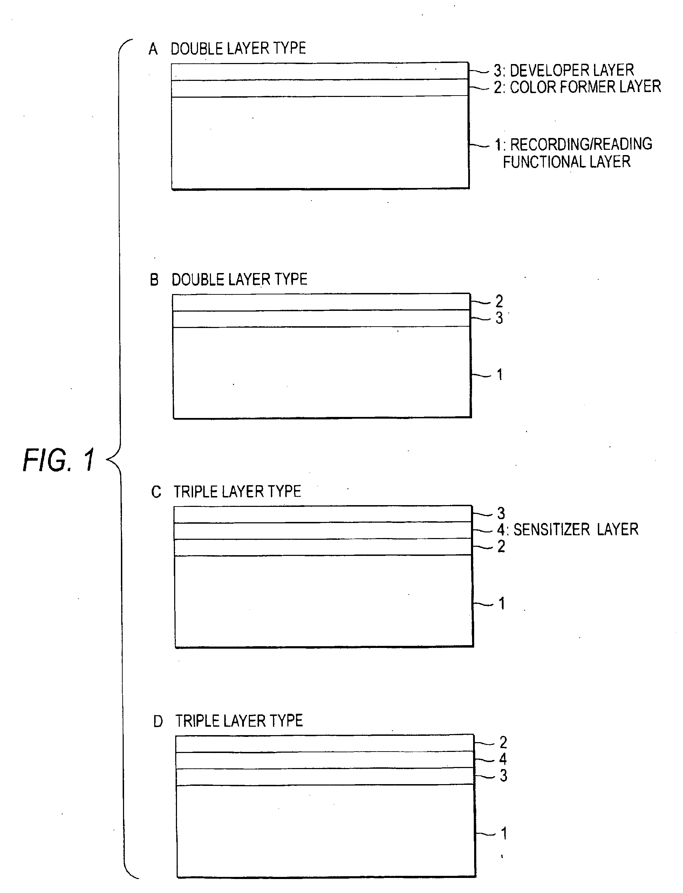

   FIG. 1 is a figure illustrating embodiments of a layer constitution of a thermal printing layer.
[FIG. 2]
   FIG. 2 is a figure showing results of thermal printing in Example 4.

### Description of Reference Numerals and Signs

- 1: recording/reading functional layer
- 2: color former layer
- 3: developer layer
- 4: sensitizer layer

The following will explain the best mode for carrying out the invention (hereinafter, an embodiment of the invention) in detail. The invention is not limited to the following embodiment of the invention and can be carried out with various modifications within the gist thereof. Moreover, the figures used only illustrate the present embodiment and do not represent actual size.

### (1) Thermal printing layer

The thermal printing layer comprises a color former layer comprising a heat-sensitive color development material and a curable resin and a developer layer comprising a developer and a curable resin.

### (1-1) Color former layer

The color former layer comprises a heat-sensitive color development material and a curable resin. The following will explain the color former layer.

### (Heat-sensitive color development material)

The heat-sensitive color development material is not particularly limited so far as it is capable of developing color through the reaction with a developer but an electron-donating color development compound is preferred. Specifically, there may be mentioned triarylmethane-based compounds, vinylphthalide-based compounds, diarylmethane-based compounds, rhodaminelactam-based compounds, thiazine-based compounds, fluoran-based compounds, pyridine-based compounds, spiro-based compounds, fluorene-based compounds, and the like. Preferably, leuco dyes such as fluoran-based compounds and phthalide compounds may be mentioned.
As the fluoran compounds, there may be, for example, mentioned 3-diethylamino-7-chloroanilinofluoran, 3-diethylamino-6-methyl-7-anilinofluoran, 3-dibutylamino-6-methyl-7-anilinofluoran, 3-ethyl(ethoxypropyl)-6-methyl-7-anilinofluoran, 3-diethylamino-6-methyl-7-(2,4-xylidino)fluoran, 3-diethylamino-6-methyl-7-(m-toluidino)fluoran, 3-diethylamino-7,8-benzofluoran, 3-diethylamino-6-methyl-7-(2,6-xylidino)fluoran, and the like.

On the other hand, as the phthalide compounds, there may be, for example, mentioned Crystal Violet lactone, 3-(4-diethylamino-2-ethoxyphenyl)-3-(1-ethyl-2-methylindol-3-yl)phthalide, 3,3-bis(1-n-butyl-2-methylindol-3-yl)phthalide, and the like.
Needless to say, with regard to the heat-sensitive color development material, two or more materials may be used in an arbitrary ratio according to need.

The heat-sensitive color development material is contained in the color former layer in an amount of usually 3% by weight or more, preferably 5% by weight or more, more preferably 10% by weight or more. This is for the purpose of easily securing sensitivity at thermal printing.
On the other hand, the heat-sensitive color development material is contained in the color former layer in an amount of usually 80% by weight or less, preferably 70% by weight or less, more preferably 60% by weight or less. This is for the purpose of easily improving industrial productivity through adjustment of viscosity of a coating liquid and the like.

### (Curable resin)

The curable resin is not particularly limited but heat-curable resin materials, photo-curable resin materials, and the like can be used. When the productivity is considered, use of a photo-curable resin material is preferred.
As such a photo-curable resin material, use of an ultraviolet curable resin is preferred when the productivity is considered.
As the ultraviolet curable resin, a radical-type (radical polymerizable) ultraviolet curable resin and a cation polymerizable ultraviolet curable resin are mentioned and any of them can be used.

As the radical-type ultraviolet curable resin, a resin obtained by polymerizing a composition comprising an ultraviolet curable compound and a photopolymerization initiator may be mentioned. As the ultraviolet curable compound, for example, a monofunctional (meth)acrylate or a polyfunctional (meth)acrylate may be mentioned as a polymerizable monomer. They can be used singly or two or more thereof may be used in combination. Herein, an acrylate and a methacrylate are collectively referred to as a (meth)acrylate. As the photopolymerization initiator, a photo-cleavage type or hydrogen-extracting type one is mentioned.

On the other hand, as the cationic ultraviolet curable resin, there may be, for example, mentioned epoxy resins comprising a cation-polymerization type photopolymerization initiator. As the epoxy resins, there may be, for example, mentioned bisphenol A-epichlorohydrin type, alicyclic epoxy, long-chain aliphatic type, brominated epoxy resin, glycidyl ester type, glycidyl ether type, heterocyclic type, and the like ones. Industrially, use of an epoxy acrylate is preferred. As the epoxy resin, it is preferred to use one having a smaller content of free chlorine and a chlorine ion. The amount of chlorine is preferably 1% by weight or less, more preferably 0.5% by weight or less. As the cationic polymerization-type photopolymerization initiator, there may be mentioned sulfonium salts, iodonium salts, diazoniumu salts, and the like.

In general, a photo-curable resin material comprises a mixture of an oligomer that is a resin main component forming a resin skeleton, a monomer as a reactive diluent, a photopolymerization initiator, an additive, and the like. For the color former layer, properties such as large hardness, small shrinkage at curing, and small change with time are usually required.
In the invention, it is preferred to obtain the color former layer by using an uncured ultraviolet curable resin precursor mainly comprising an epoxy acrylate and curing the same.

For increasing hardness, usually, a molecular structure of the oligomer itself is devised or a monomer having a difunctional, trifuctional, or polyfunctional reactive group is used so as to be three-dimensionally crosslinked. When an amount of the polyfunctional monomer component is too large, the shrinkage at curing tends to be increased. For preventing it, a balance is usually achieved by devising the structure of the oligomer or adjusting the composition ratio of each monomer.

A change of the curable resin with time is frequently induced by evaporation of uncured components, generation of a corrosive component caused by decomposition, and the like. Therefore, in order to suppress the change with time, the composition of the mixture, particularly the kind and amount of the photopolymerization initiator are devised. However, since the photopolymerization initiator is not incorporated into the crosslinking of the resin, it may be gradually evaporated (eluted). Therefore, the above photopolymerization initiator is preferably used only in a minimum amount required.
A lower limit of the curable resin content in the color former layer is not limited but desirably, it is usually 20% by weight or more, preferably 30% by weight or more, more preferably 40% by weight or more. This is for the purpose of securing a physical property of the thermal printing layer and, in the case where the thermal printing layer is an outer layer (a layer close to the thermal head), for preventing leakage of the heat-sensitive color development material from the thermal printing layer and suppressing bruises by the thermal head.
Moreover, an upper limit of the curable resin content in the color former layer is not limited but desirably, it is usually 95% by weight or less, preferably 90% by weight or less, more preferably 85% by weight or less. This is for the purpose of achieving suitable contact of the heat-sensitive color development material in the color former layer with the developer in the developer layer to be described below at the interface of the both layers at thermal printing.

### (Other additives)

The color former layer may further comprise a wax for the purpose of improvement in color development property, enhancement in recording sensitivity, and the like. As such a wax, there may be, for example, mentioned 1,2-di(3-methylphenoxy) ethane, 1,2-diphenoxyethane, p-benzylbiphenyl, naphthyl benzyl ether, benzyl-4-methylthiophenyl ether, oxalic acid dibenzyl ester, oxalic acid-di-p-methylbenzyl ester, oxalic acid-di-p-chlorobenzyl ester, terephthalic acid dibutyl ester, terephthalic acid dibenzyl ester, stearic acid amide, methylenebisstearic acid amide, dibenzyl terephthalate, benzyl p-benzyloxybenzoate, 2-naphthyl benzyl ether, p-tolyl biphenyl ether, di(p-methoxyphenoxyethyl) ether, 1,2-di(4-methylphenoxy)ethane, 1,2-di(4-chlorophenoxy)ethane, 1-(4-methylphenoxy)-2-(3-methylphenoxy)ethane, p-methylthiophenyl benzyl ether, 1,4-di(phenylthio)butane, p-acetotoluidide, p-acetophenetidide, N-acetoacetyl-p-toluidine, di (β-biphenylethoxy)benzene, 2-(2'-hydroxy-5'-methylphenyl)benzotriazole, and the like. In view of the recording sensitivity by heat-sensitive recording, a wax having a melting point of 120°C or lower is preferred. Needless to say, two or more of the above waxes may be used in a predetermined ratio in combination according to need.

To the color former layer, other than the aforementioned materials, various additives can be used in combination according to need. For example, in order to improve light resistance of the color former layer, it is preferred to use a light stabilizer. As the light stabilizer, there may be mentioned an ultraviolet absorbent; an antioxidant, an antiaging agent, a quencher of singlet oxygen, and the like.

As the ultraviolet absorbent, there may be, for example, mentioned benzophenone-based ultraviolet absorbents such as 2,4-dihydroxybenzophenone, 2-hydroxy-4-methoxybenzophenone, 2-hydroxy-4-n-octoxybenzophenone, 4-dodecyloxy-2-hydroxybenzophenone, 2,2'-dihydroxy-4-methoxybenzophenone, 2,2'-dihydroxy-4,4'-dimethoxybenzophenone, 2,2',1,4'-tetrahydroxybenzophenone, 2-hydroxy-4-methoxy-2'-carboxybenzophenone, 2-hydroxy-4-oxybenzylbenzophenone, 2-hydroxy-4-chlorobenzophenone, 2-hydroxy-5-chlorobenzophenone, 2-hydroxy-4-methoxy-4'-methylbenzophenone, 2-hydroxy-4-n-heptoxybenzophenone, 2-hydroxy-3,6-dichloro-4-methoxybenzophenone, 2-hydroxy-3,6-dichloro-4-ethoxybenzophenone, and 2-hydroxy-4-(2-hydroxy-3-methylacryloxy)propoxybenzophenone.

As the other ultraviolet absorbents, there may be, for example, mentioned benzotriazole-based ultraviolet absorbents such as 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-4'-octoxy)benzotriazole, 2-(2'-hydroxy-3',5'-di-tert-butylphenyl)5-chlorobenzotriazole, 2-(3'-tert-butyl-2'-hydroxy-5'-methylphenyl)5-chlorobenzotriazole, and 2-(2'-hydroxy-5-ethoxyphenyl)benzotriazole; salicylic acid phenyl ester-based ultraviolet absorbents such as phenyl salicylate, p-octylphenyl salicylate, p-tert-butylphenyl salicylate, carboxylphenyl salicylate, methylphenyl salicylate, and dodecylphenyl salicylate; ester-based ultraviolet absorbents such as p-methoxybenzylidenemalonic acid dimethyl eater, 2-ethylhexyl-2-cyano-3,3'-diphenylacrylate, and ethyl-2-cyano-3,3'-diphenylacrylate; 3,5-di-tert-butyl-p-hydroxybenzoic acid, resorcinol monobenzoate which rearranges with an ultraviolet ray to form benzophenone, 2,4-di-tert-butylphenyl, 3,5-di-tert-butyl-4-hydroxybenzoate, and the like.
Needless to say, these ultraviolet absorbents may be used as a combination of two or more thereof in a predetermined ratio according to need.

As the antioxidant and antiaging agent, there may be, for example, mentioned 2,6-di-tert-butyl-4-methylphenol, 2,4,6-tri-tert-butylphenol, styrenized phenol, 2,2'-methylenebis(4-methyl-6-tert-butylphenol), 4,4'-isopropylidenebisphenol, 2,6-bis(2'-hydroxy-3'-tert-butyl-5'-methylbenzyl)-4-methylphenol, 4,4'-thiobis-(3-methyl-6-tert-butylphenol), tetrakis-{methylene (3,5-di-tert-butyl-4-hydroxyhydrocinnamate)}methane, p-hydroxyphenyl-3-naphthylamine, 2,2,4-trimethyl-1,2-dihydroquinoline, thiobis(β-naphthol), mercaptobenzothiazole, mercaptobenzimidazole, aldol-2-naphthylamine, bis(2,2,6,6-tetramethyl-4-piperidyl)cebacate, 2,2,6,6-tetramethyl-4-piperidyl benzoate, dilauryl-3,3'-thiodipropionate, distearyl-3,3'-thiodipropionate, tris(4-nonylphenylphenol)phosphite, and the like. Needless to say, these materials may be used as a combination of two or more thereof in a predetermined ratio according to need.

As the quencher of singlet oxygen, there are, for example, carotenes, dyes, amines, phenols, nickel complexes, sulfides, and the like and may be, for example, mentioned 1,4-diazabicyclo(2,2,2)octane, β-carotene, 1,3-cyclohexadiene, 2-diethylaminomethylfuran, 2-phenylaminomethylfuran, 9-diethylaminomethylanthracene, 5-diethylaminomethyl-6-phenyl-3,4-dihydroxypyran, nickel dimethyldithiocarbamate, nickel dibutyldithiocarbamate, nickel 3,5-di-t-butyl-4-hydroxybenzyl-o-ethyl phosphonate, nickel 3,5-di-t-butyl-4-hydroxybenzyl-o-butyl phosphonate, nickel {2,2'-thiobis(4-t-octylphenolate)}(n-butylamine), nickel {2,2'-thiobis(4-t-octylphenolate)}(2-ethylhexylamine), nickel bis(2,2'-thiobis(4-t-octylphenolate)}, nickel bis{2,2'-sulfonebis(4-octylphenolate)}, nickel bis(2-hydroxy-5-methoxyphenyl-N-n-butylaldoimine), nickel bis(dithiobenzyl), nickel bis(dithiobiacetyl), and the like. Needless to say, these materials may be used as a combination of two or more thereof in a predetermined ratio according to need.

Moreover, it may comprise components other than the above within the range where various performances such as a recording property, visibility, and recording sensitivity of the color former layer are not impaired.
The optional components such as waxes and various additives explained above may be used singly or two or more kinds thereof may be used in combination. Moreover, a content of the above additives is arbitrary but it is preferred that the content is usually 5 parts by weight or more and 500 parts by weight or less based on 100 parts by weight of the heat-sensitive color development material.

Moreover, it is preferred to incorporate a sensitizer into the color former layer. The sensitizer is usually added for the purpose of lowering the color development-initiating temperature to enhance the sensitivity of the color former layer. For the sensitizer, a relatively low melting point and good compatibility with the heat-sensitive color development material and the developer are required. When the melting point is too low, heat resistance of a non-imaging part is impaired in some cases, so that generally a compound having a melting point of 80°C to 120°C is employed. As such a sensitizer, specifically a naphthol derivative can be used.

A preferred compound of the naphthol derivatives is represented by the following general formula (I).

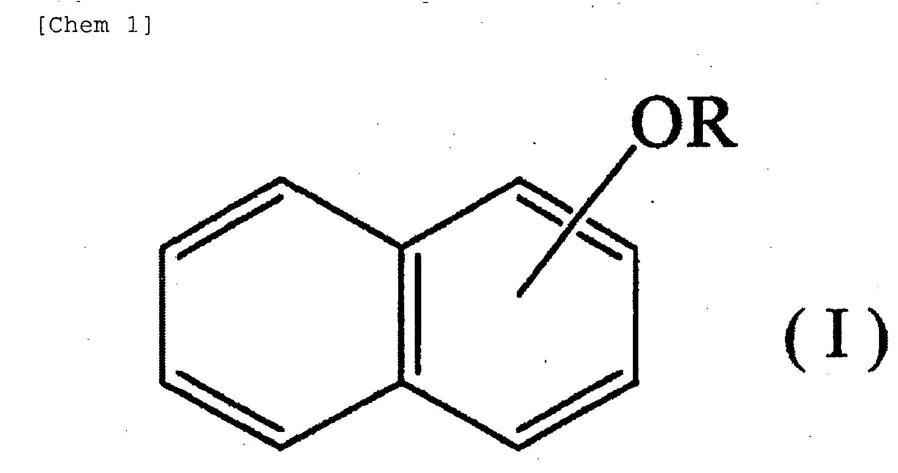

In the above formula, R represents an alkyl group, an aralkyl group, an aryl group, an alkylcarbonyl group, an arylcarbonyl group, an alkylsulfonyl group, or an arylsulfonyl group. The substituent represented by R in the above formula may further have substituent(s).
Among the substituents represented by R in the above general formula, an alkyl group having 4 to 20 carbon atoms, an aralkyl group having 6 to 24 carbon atoms, an alkylcarbonyl group having 2 to 20 carbon atoms, and an arylcarbonyl group having 7 to 20 carbon atoms are more preferred.
Moreover, in the above general formula, the naphthalene ring may further have substituent (s). As preferable examples of the substituent, there may be mentioned an alkyl group, an aralkyl group, a halogen atom, a hydroxy group, an alkoxy group, an aryloxy group, an alkylcarbonyloxy group, an arylcarbonyloxy group, an alkoxycarbonyl group, an aryloxycarbonyl group, a carbamoyl group, a sulfamoyl group, and the like.

In the above naphthol derivatives, as the substituent of the naphthalene ring, a halogen atom, an alkyl group having 1 to 10 carbon atoms, an alkoxycarbonyl group having 2 to 20 carbon atoms, an aryloxycarbonyl group having 7 to 20 carbon atoms, and a substituted carbamoyl group having 2 to 25 carbon atoms are more preferred.
Moreover, of the above naphthol derivatives, those having a melting point ranging from 40°C to 150°C are preferred and particularly, those having a melting point ranging from 50°C to 120°C are preferred.

As specific examples of the naphthol derivatives represented by the general formula (I), there may be, for example, mentioned 1-benzyloxynaphthalene, 2-benzyloxynaphthalene, 2-p-chlorobenzyloxynaphthalene, 2-p-isopropylbenzyloxynaphthalene, 2-dodecyloxynaphthalene, 2-decanoyloxynaphthalene, 2-myristoyloxynaphthalene, 2-p-t-butylbenzoyloxynaphthalene, 2-benzoyloxynaphthalene, 2-benzyloxy-3-N-(3-dodecyloxypropyl)carbamoylnaphthalene, 2-benzoyloxy-3-N-octylcarbamoylnaphthalene, 2-benzyloxy-3-dodecyloxycarbonylnaphthalene, 2-benzyloxy-3-p-t-butylphenoxycarbonylnaphthalene, and the like.

In the case where the heat-sensitive color development material is contained in the color former layer, it is desired that an additive amount of the sensitizer is usually 5 parts by weight or more, preferably 30 parts by weight or more, more preferably 50 parts by weight or more based on 100 parts by weight of the heat-sensitive color development material (e.g., leuco dye). When the amount is within the above range, a sensitivity-enhancing effect is easily obtained. On the other hand, it is desired that the additive amount of the sensitizer is usually 500 parts by weight or less, preferably 300 parts by weight or less, more preferably 200 parts by weight or less, particularly preferably 100 parts by weight or less based on 100 parts by weight of the heat-sensitive color development material. When it is within the above range, a material cost is apt to be effectively suppressed. In the case where two or more sensitizers are used in combination, it is sufficient that the total amount falls within the above range.

### (Film thickness)

A lower limit of the film thickness of the color former layer is not particularly limited but is usually 1 µm or more, preferably 2 µm or more, more preferably 3 µm or more. By regulating it within the above range, the sensitivity at thermal printing is easily secured.
On the other hand, an upper limit of the film thickness of the color former layer is not particularly limited but is usually 50 µm or less, preferably 30 µm or less, more preferably 25 µm or less, further preferably 20 µm or less, particularly preferably 10 µm or less. By regulating it within the above range, heat is easily transmitted at thermal printing and thus heat efficiency is easily secured.

### (Production method)

The composition for forming the color former layer comprising a heat-sensitive color development material and a curable resin commonly has a liquid form having a predetermined viscosity (ink state) before curing. Therefore, the color former layer is usually produced by the following method.
First, a coating liquid comprising a heat-sensitive color development material, a material of a curable resin, and a predetermined additive according to need is prepared. On this occasion, the sensitive color development material and the additive may be dissolved or dispersed in the coating liquid. In the invention, since the color former layer and the developer layer are separated layers, an unforeseen reaction of the heat-sensitive color development material with the developer is easily suppressed. Therefore, it is not necessary to allow the heat-sensitive color development material or the after-mentioned developer to exist in the coating liquid in a dispersed (non-dissolved) state. As a result, the range of the combinations of the usable heat-sensitive color development material and the developer can be remarkably expanded.
Then, the above ink is applied by spin coating, bar coating, blade coating, air-knife coating, roll coating, spray coating, screen printing, or the like. Thereafter, the coated film is cured.

In the above production example, the color former layer is cured as a single layer but the invention is not limited to the above production example. For example, other layer(s) may be applied beneath or on the color former layer and a plurality of these layers may be cured collectively. However, in the case where the color former layer and the after-mentioned developer layer are provided in contact, it is preferred to provide the developer layer after the color former layer is cured or to provide the color former layer after the developer layer is cured. By adopting such a method, an unforeseen reaction of the color former with the developer is further easily suppressed.

Among the above application methods, screen printing is preferred because of easy regulation of thickness, a small amount of ink to be used, and high productivity. Moreover, for curing the color former layer, heat or a light is usually employed but preferably the light is employed. Further preferably, it is cured with an ultraviolet ray. By using a light, a high productivity is easily secured, influence of warp of the color former layer at thermal curing is easily suppressed, and further evenness of the film thickness of the color former layer is easily maintained.
Moreover, by repeating the above coating step and curing step, the film thickness of the color former layer can be also controlled.

As an ultraviolet irradiation source, a mercury lamp, a high-pressure mercury lamp, an ultrahigh-pressure mercury lamp, a metal halide lamp, or the like is used. An irradiation energy amount is not limited but is usually 150 mJ/cm² or more, preferably 250 mJ/cm² or more. On the other hand, the irradiation energy amount is usually 2000 mJ/cm² or less, preferably 1000 mJ/cm² or less.

### (1-2) Developer layer

The developer layer comprises a developer and a curable resin. The following will explain the developer layer.

### (Developer)

The developer is not particularly limited so far as it can develop color through a reaction with the aforementioned heat-sensitive color development material, and an acidic substance commonly used for heat-sensitive papers, i.e., an electron-accepting compound is used. As the developer, for example, phenol derivatives and aromatic carboxylic acid derivatives can be used.
Preferred compounds of the phenol derivatives are compounds having at least one phenolic hydroxyl group. More preferred are phenol derivatives unsubstituted on both or one ortho-position(s) of the phenolic hydroxyl group.

As the phenol derivatives, there may be, for example, mentioned phenol, p-t-butylphenol, p-phenylphenol, 1-naphthol, 2-naphthol, p-hydroxyacetophenone, 2'-dihydroxybiphenyl, 4'-isopropylidenediphenol, 4'-isopropylidenediphenol, 4'-isopropylidenebis(2-t-butylphenol), 4'-isopropylidenebis(2-chlorophenol), 4'-cyclohexylidenediphenol, 2-bis(4-hydroxyphenyl)butane, 2-bis(4-hydroxyphenyl)pentane, 2-bis(4-hydroxyphenyl)hexane, diphenolacetic acid methyl ester, bis(4-hydroxyphenyl) sulfone, bis(3-allyl-4-hydroxyphenyl) sulfone, 4-hydroxy-4'-methyldiphenyl sulfone, 4-hydroxy-4'-isopropyloxydiphenyl sulfone, 4-hydroxyphenyl (4'-n-propoxyphenyl) sulfone, bis(4-hydroxyphenyl) sulfide, 4'-thiobis(2-t-butyl-5-methyl)phenol, 7-bis(4-hydroxyphenylthio)-5-dioxyheptane, novolak-type phenol resins, and the like.

As the aromatic carboxylic acid derivatives, there may be, for example, mentioned benzoic acid, p-t-butylbenzoic acid, p-hydroxybenzoic acid, p-hydroxybenzoic acid methyl ester, p-hydroxybenzoic acid isopropyl ester, p-hydroxybenzoic acid benzyl ester, gallic acid lauryl ester, gallic acid stearyl ester, salicylanilide, 5-chlorosalicylanilide, metal salts such as zinc salt of 5-t-butylsalicyl acid, metal salts such as zinc salt of hydroxynaphthoic acid, and the like.
Needless to say, with regard to the developer, two or more kinds thereof may be used in an arbitrary ratio according to need.

The developer is contained in the developer layer in an amount of usually 3% by weight or more, preferably 5% by weight or more, more preferably 10% by weight or more. Thereby, sensitivity at thermal printing is easily secured.
On the other hand, the developer is contained in the developer layer in an amount of usually 80% by weight or less, preferably 70% by weight or less, more preferably 60% by weight or less. This is for the purpose of easily securing industrial productivity, e.g., easily securing a viscosity of a coating liquid.

### (Curable resin)

As the curable resin contained in the developer layer, one the same as the curable resin contained in the aforementioned color former layer may be mentioned.
In this connection, it is preferred that the curable resin contained in the color former layer and the curable resin contained in the developer layer are the same curable resin. This is based on the reasons of easy improvement of the productivity, easy securing of compatibility at thermal printing, and the like.
A lower limit of the curable resin content in the developer layer is not limited but desirably, it is usually 20% by weight or more, preferably 30% by weight or more, more preferably 40% by weight or more. This is for the purpose of securing physical strength of the developer layer and, in the case where the thermal printing layer is an outer layer (a layer close to the thermal head), for preventing leakage of the developer from the developer layer and suppressing bruises by the thermal head.
Moreover, an upper limit of the curable resin content in the developer layer is not limited but desirably, it is usually 95% by weight or less, preferably 90% by weight or less, more preferably 85% by weight or less. This is for the purpose of achieving suitable contact of the developer in the developer layer with the heat-sensitive color development material in the aforementioned color former layer at the interface of the both layers at thermal printing.

### (Other materials)

Moreover, as the other materials contained in the developer layer, those the same as the other materials contained in the aforementioned color former layer may be mentioned.

### (Film thickness)

A lower limit of the film thickness of the developer layer is not limited but is usually 1 µm or more, preferably 2 µm or more, more preferably 3 µm or more. By regulating it within the above range, the sensitivity at thermal printing is easily secured.
On the other hand, an upper limit of the film thickness of the developer layer is not limited but is usually 50 µm or less, preferably 30 µm or less, more preferably 25 µm or less, further preferably 20 µm or less, particularly preferably 10 µm or less. By regulating it within the above range, heat is easily transmitted at thermal printing and thus heat efficiency is easily secured.

### (Production method)

The developer layer can be formed by the same method as in the case of the aforementioned color former layer.

### (1-3) Other layers (sensitizer layer)

Needless to say, layers other than the color former layer and the developer layer may be provided within the gist of the invention. Moreover, the positions at which these other layers are provided are also arbitrary within the gist of the invention.
As such layers, a sensitizer layer may be mentioned. The sensitizer layer usually comprises a sensitizer and a curable resin.
In the case where the sensitizer layer is not provided, it is preferred to incorporate a sensitizer into at least one of the color former layer and the developer layer. This is because sensitivity of each layer is easily enhanced by incorporating a sensitizer into the color former layer or the developer layer.

### (Sensitizer)

As the sensitizer contained in the sensitizer layer, one the same as the sensitizer contained in the aforementioned color former layer can be used.
A lower limit of the sensitizer content in the sensitizer layer is not limited but desirably, it is usually 10% by weight or more, preferably 20% by weight or more, more preferably 30% by weight or more. This is for the purpose of achieving suitable contact of the sensitizer in the sensitizer layer with the heat-sensitive color development material in the aforementioned color former layer and the developer in the aforementioned developer layer at the interface of the individual layers at thermal printing.
Moreover, an upper limit of the sensitizer content in the sensitizer layer is not limited but desirably, it is usually 90% by weight or less, preferably 80% by weight or less, more preferably 70% by weight or less. This is for the purpose of preventing leakage of the sensitizer from the sensitizer layer to the adjacent layer and surface in the sate where thermal printing is not performed (including post-thermal printing).

### (Curable resin)

As the curable resin contained in the sensitizer layer, one the same as the curable resin contained in the aforementioned color former layer can be used.
A lower limit of the curable resin content in the sensitizer layer is not limited but desirably, it is usually 10% by weight or more, preferably 20% by weight or more, more preferably 30% by weight or more. This is for the purpose of preventing leakage of the sensitizer from the sensitizer layer to the adjacent layer and surface in the sate where thermal printing is not performed (including post- thermal printing).
Moreover, an upper limit of the curable resin content in the sensitizer layer is not limited but desirably, it is usually 90% by weight or less, preferably 80% by weight or less, more preferably 70% by weight or less. This is for the purpose of achieving suitable contact of the sensitizer in the sensitizer layer with the heat-sensitive color development material in the aforementioned color former layer and the developer in the aforementioned developer layer at the interface of the individual layers at thermal printing.

### (Other additives)

As the other additives contained in the sensitizer layer, those other than the sensitizer among the additives explained in the "other materials" in the aforementioned color former layer can be suitably employed. The content of each of these additives is also as explained in the above "other materials".

### (Film thickness)

An upper limit of the film thickness of the sensitizer layer is not limited but is usually 15 µm or less, preferably 10 µm or less, more preferably 7 µm or less. By regulating it within the above range, the contact of the heat-sensitive color development material with the developer is easily accelerated.
On the other hand, a lower limit of the film thickness of the sensitizer layer is not limited but is usually 1 µm or more, preferably 2 µm or more, more preferably 3 µm or more. By regulating it within the above range, an unexpected contact of the heat-sensitive color development material with the developer is easily suppressed.

### (Production method)

The sensitizer layer can be formed by the same method as in the case of the aforementioned color former layer.

### (1-4) Layer constitution

The thermal printing layer comprises a color former layer comprising a heat-sensitive color development material and a curable resin and a developer layer comprising a developer and a curable resin. Needless to say, in the thermal printing layer, layers other than the above color former layer and the developer layer may be further employed. As such layers, the aforementioned sensitizer layer may be mentioned.
Moreover, the order of providing the color former layer and the developer layer is also arbitrary. The side with which the thermal head may come into contact may be the color former layer or may be the developer layer. As mentioned below, in the case where the thermal printing layer of the invention is used for an optical recording medium, the layers may be provided in the order of the color former layer and the developer layer or may be provided in the order of the developer layer and the color former layer from the side of the optical recording medium.
As preferable layer constitution as the thermal printing layer, the following two embodiments may be mentioned.

### (i) Double layer structure of color former layer and developer layer

In consideration of heat-imparting efficiency at thermal printing, it is preferred to provide a layer comprising a material having a higher melting point among the above heat-sensitive color development material and developer at a side near to the side on which thermal printing with the thermal head is performed. In the case where the sensitizer is incorporated into the color former layer or the developer layer, it may be incorporated into either layer or may be incorporated into the both layers.
A thickness of the developer layer on the basis of the color former layer is not limited but desirably, is usually 0.1 or more, preferably 0.2 or more, more preferably 0.5 or more and is usually 10 or less, preferably 5 or less, more preferably 2 or less.

### (ii) Triple layer structure of color former layer, sensitizer layer, and developer layer

In the case of using the sensitizer layer, the following is preferred. Namely, in order to suppress an unforeseen reaction of the heat-sensitive color development material contained in the color former layer with the developer contained in the developer layer, it is preferred to provide the sensitizer layer between the color former layer and the developer layer. In such a layer constitution, along with the suppression of the above unforeseen reaction (improvement of stability), a sensitization effect is easily maintained since the sensitizer layer comes into contact with both of the developer layer and the color former layer.

(iii)
Desirably, the elastic modulus at 30°C of the curable resin constituting the closest layer to the thermal head at printing among the color former layer, the sensitizer layer, and the developer layer is 1000 Pa or more, preferably 1500 Pa or more, more preferably 2000 Pa or more, further preferably 3000 Pa or more. The higher elastic modulus of the curable resin at 30°C is more preferred but a realistic upper limit is usually about 5000 Pa. In the case where the curable resin constituting the closest layer to the thermal head has the above elastic modulus, printing stability with time is easily secured and further, bruises by the contact with the thermal head can be prevented.

Moreover, desirably, at least one of the curable resins constituting the color former layer, the sensitizer layer, and the developer layer has an elastic modulus at 150°C of 1100 Pa or less, preferably 1000 Pa or less, more preferably 500 Pa or less, further preferably 300 Pa or less, particularly preferably 100 Pa or less. The smaller elastic modulus of the curable resin at 150°C is more preferred but a realistic lower limit is usually about 5 Pa. In the case where the curable resin has the above elastic modulus, the color development sensitivity at thermal printing can be improved since the contact of the heat-sensitive color development material with the developer is good.

### (2) Base material

The thermal printing layer is provided on optically recordable recording media (CD-R, CD-RW, recordable DVD, rewritable DVD, blue-laser capacitated optical recording media, etc.).
From the viewpoint of industrially high needs, an optically recordable recording medium is suitably employed. Thus, the following will explain the case where an optically recordable recording medium is used as a base material and the thermal printing layer is provided on the base material. The optical recording medium of the invention comprises the above thermal printing layer and a recording/reading functional layer where recording or reading is performed with a light. Moreover, the above thermal printing layer is formed on a side of the recording/reading functional layer in which the side is opposite to a side on which the light enters.
The recording/reading functional layer can adopt a layer constitution according to each purpose of the case of read-only media (ROM media), the case of recordable media on which recording is possible only once (Write Once media), or the case of rewritable media on which recording/erasing can be conducted repeatedly (ReWritable media). Moreover, the recording/reading functional layer can be classified into a substrate side-incident type and a film side-incident type depending on the incident direction of a recording/reading light.

### (Example of read-only media)

In the case of the read-only media, the recording/reading functional layer usually has a substrate where a pit having a predetermined size is formed, and a reflective layer and a protective layer formed on the substrate. As a material for the reflective layer, a metal such as Al, Ag, or Au or an alloy thereof is usually employed. As a material for the protective layer, an ultraviolet curable resin or the like is usually used. Moreover, as the protective layer, a plate-form member made of a resin such as polycarbonate or made of a metal is employed in some cases. In the case of the read-only media, the layer constitution is the same in both cases where the medium is the substrate side-incident type or the film side-incident type.
In the case of the read-only media, in the recording/reading functional layer, a reflective layer is formed on the substrate by a sputtering method and then a protective layer is formed through curing an ultraviolet curable resin applied on the reflective layer.
Moreover, in the case where a plate-form member is used as the protective layer, the plate-form member is adhered on the reflective layer with an adhesive.

### (Example 1 of recordable media)

In the recordable media of the film side-incident type, the recording/reading functional layer is usually obtained by providing a reflective layer, a recording layer, and a protective layer on a substrate in this order. Herein, a buffer layer formed with an inorganic material (e.g., ZnS/SiO₂) may be provided between the recording layer and the protective layer.
On the other hand, in the recordable media of the substrate side-incident type, the recording/reading functional layer is usually obtained by providing a recording layer, a reflective layer, and a protective layer on a substrate in this order.

As a material for the reflective layer, a metal such as Al, Ag, or Au or an alloy thereof is usually employed. As a material for the protective layer, an ultraviolet curable resin is usually used. Moreover, as the protective layer, a plate-form member of a resin (e.g., polycarbonate), a metal, or the like is employed in some cases. A formation method of the reflective layer and the protective layer may be the same as in the case of the read-only media. In the case where a plate-form member of a resin (e.g., polycarbonate), a metal, or the like is employed for the protective layer, the member may be adhered on the recording layer, the buffer layer, or the reflective layer with an adhesive.

As a material for the recording layer in the above recordable media, an organic dye is usually used. As such an organic dye, there may be mentioned macrocyclic azaanulene-based dyes (phthalocyanine dye, naphthalocyanine dye, porphyrin dye, etc.), polymethine-based dyes (cyanine dye, merocyanine dye, squalirium dye, etc.), anthraquinone-based dyes, azurenium-based dyes, metal-containing azo-based dyes, metal-containing indoaniline-based dyes, and the like. In particular, metal-containing azo-based dyes tend to be excellent in durability.

In the case of forming the recording layer with the organic dye, the layer is usually formed by means of a coating method such as spin coating, spray coating, dip coating, or roll coating with a solution obtained by dissolving an organic dye in an appropriate solvent. On this occasion, as the solvent, there is suitably used a ketone alcohol solvent such as diacetone alcohol or 3-hydroxy-3-methyl-2-butanone, a cellosolve solvent such as methyl cellosolve or ethyl cellosolve, a perfluoroalkyl alcohol solvent such as tetrafluoropropanol or octafluoropentanol, or a hydroxyethyl solvent such as methyl lactate or methyl isobutyrate.

A thickness of the recording layer is not particularly limited since suitable film thickness varies depending on the recording method and the like. In order to obtain a sufficient degree of modulation, the thickness is usually 1 nm or more, preferably 5 nm or more, particularly preferably 10 nm or more. However, since it is necessary to transmit light, the thickness of the recording layer is usually 3 µm or less, preferably 1 µm or less, more preferably 200 nm or less, further preferably 100 nm or less.

### (Example 2 of recordable media)

In another example of the recordable media of the film side-incident type, the recording/reading functional layer is usually obtained by providing a reflective layer, a dielectric layer, a recording layer, a dielectric layer, and a protective layer on a substrate in this order. On the other hand, in another example of the recordable media of the substrate side-incident type, the recording/reading functional layer is usually obtained by providing a dielectric layer, a recording layer, a dielectric layer, a reflective layer, and a protective layer on a substrate in this order.

As a material for the reflective layer, a metal such as Al, Ag, or Au or an alloy thereof is usually employed. As a material for the protective layer, an ultraviolet curable resin is usually used. Moreover, as the protective layer, a plate-form member of a resin (e.g., polycarbonate), a metal, or the like is employed in some cases. A formation method of the reflective layer and the protective layer may be the same as in the case of the read-only media.
As a material for the dielectric layer, an inorganic material (representatively, ZnS/SiO₂ or GeCrN) is usually used. A thickness of the dielectric layer is usually 0.5 nm or more and usually 50 nm or less. The dielectric layer may be formed by laminating a plurality of different inorganic materials according to need (e.g., may be a laminated structure of a ZnS/SiO₂ layer and a GeCrN layer). The dielectric layer is usually formed by sputtering.

For the recording layer, an inorganic material (e.g., a chalcogen-based alloy such as Ge-Te or Ge-Sb-Te, a double layer film such as Si/Ge or Al/Sb, a (partial) nitride film such as BiGeN or SnNbN, or a (partial) oxide film such as TeOx or BiFOx) is used. The recording layer is usually formed by sputtering. A thickness of the recording film is usually about 1 nm to 50 nm.

### (Example 1 of rewritable media)

In the rewritable media of the film side-incident type, the recording/reading functional layer is usually obtained by providing a reflective layer, a dielectric layer, a recording layer, a dielectric layer, and a protective layer on a substrate in this order. On the other hand, in the rewritable media of the substrate side-incident type, the recording/reading functional layer is usually obtained by providing a dielectric layer, a recording layer, a dielectric layer, a reflective layer, and a protective layer on a substrate in this order.

The reflective layer, dielectric layer, recording layer, and protective layer are the same as in the above example 2 of the recordable media. However, the recording layer is necessarily made of a material capable of recording and erasing reversibly. As such a material, there may be, for example, mentioned materials such as SbTe-based, GeTe-based, GeSbTe-based, InSbTe-based, AgSbTe-based, AgInSbTe-based, GeSb-based, GeSbSn-based, InGeSbTe-based, InGeSbSnTe-based ones.

### (Example 2 of rewritable media)

As another specific example of the rewritable media, magneto optical recording media (MO disks) may be mentioned.

### (Common items)

As a material for the substrate on which the recording/reading functional layer is formed, there may be usually mentioned plastics, metals, glass, and the like, which possess appropriate workability and rigidity. In the case where the optical recording medium is a substrate side-incident type, a light-transmitting material that is transparent with respect to an entering light is used as the material for the substrate. On the other hand, in the optical recording medium of a film side-incident type, the substrate may not be transparent with respect to an incident laser light. As the plastic material, there may be, for example, mentioned polycarbonate resins, polyolefin resins, acrylic resins, epoxy resins, and the like.

A thickness of the substrate is preferably about 0.5 mm to 1.2 mm. In the case of CD type media, a substrate having a thickness of 1.2 mm is usually used. Moreover, in the case of DVD type media, a substrate having a thickness of 0.6 mm where a predetermined pit or guide groove for tracking is formed on the surface is used and a dummy substrate having a thickness of 0.6 mm is attached thereto, thereby the media being prepared.

On the substrate surface, a guide groove for tracking having a predetermined track pitch is formed. The track pitch varies depending on a wavelength of a recording/reading light and, in the CD type optical recording media, it is usually 1.5 µm to 1.6 µm. Moreover, in the DVD type optical recording media, it is usually 0.7 µm to 0.8 µm. In the optical recording media for blue laser, it is usually 0.2 µm to 0.5 µm. A groove depth of the guide groove for tracking is usually 10 nm to 300 nm in the CD type optical recording media. The depth is usually 10 nm to 200 nm in the DVD type optical recording media. The depth is usually 10 nm to 200 nm in the optical recording media for blue laser.

With regard to the substrate, in the case of using a plastic material, the disk-shaped shape and the surface guide groove are formed in one step by injection molding or the like. In the case of using a metal, glass, or the like, the grooves are formed on a light-curable or heat-curable thin resin layer which has been provided on the surface.
Moreover, on the recording/reading functional layer, a recording/reading region is defined. In the case where the recording/reading functional layer is a plate cyclic shaped one having a central hole, the recording/reading region is defined within a range determined by an inner diameter larger than the diameter of inner circumference and an outer diameter smaller than the diameter of outer circumference.

### (Others)

In the above "Example of read-only media", "Example 1 of recordable media", "Example 2 of recordable media", and "Example 1 of rewritable media", from the viewpoint or increasing recording capacity, a plurality of recording layers may be provided. In the case where a plurality of recording layers are provided, the number of the recording layers are usually two or more layers, preferably three or more layers in consideration of the recording capacity. On the other hand, the number of the recording layers is usually ten or less layers, preferable five or less layers.

### (3) Preferred embodiment or optical recording media

The following will explain a more preferred embodiment of the optical recording media according to the invention.
FIG. 1 is a figure illustrating embodiments of the layer constitution of the thermal printing layer. A layer constitution of the thermal printing layer formed on a DVD-R as a recording/reading functional layer 1 is shown there. In this connection, a DVD-R usually has a structure where a substrate, a recording layer, a reflective layer, and a protective layer that is provided according to need are laminated in this order. FIG. 1A shows a double layer structure wherein a color former layer 2 and a developer layer 3 are formed on a recording/reading functional layer 1 in the order and FIG. 1B shows a double layer structure wherein a developer layer 3 and a color former layer' 2 are formed on a recording/reading functional layer 1 in the order.
Moreover, FIG. 1C shows a triple layer structure wherein a color former layer 2, a sensitizer layer 4, and a developer layer 3 are formed on the recording/reading functional layer 1 in the order and FIG. 1D shows a triple layer structure wherein a developer layer 3, a sensitizer layer 4, and a color former layer 2 are formed on a recording/reading functional layer 1 in the order.

### (4) Thermal printing method and apparatus

The thermal printing can be performed with a thermal head by known methods. A specific method of the thermal printing is, for example, as described in JP-A-2000-155989.
Usually, the thermal printing is performed by bringing the thermal head into contact with or proximity to the thermal printing layer and moving it relatively. The thermal head and the thermal printing layer may be in contact or non-contact with each other. In the case where the shape of the thermal printing layer or the optical recording medium on which the thermal printing layer is provided is a circular flat plate (disk shape), it is preferred to print it with rotating the thermal printing layer and moving the thermal head in a radial direction of the thermal printing layer.

The thermal head is not limited and a thin-film thermal head, a laser type thermal head, an LED type thermal head, or the like can be used. Of these, a laser type thermal head and an LED type thermal head are preferred. This is because printing is possible with no contact of the thermal head with the thermal printing layer, dust generation and head smearing do not occur, cleaning of the heat-sensitive head is unnecessary, and hence maintenance becomes easy. Furthermore, since printing is possible in non-contact, there is an advantage that printing is possible even when surface of the thermal printing layer is uneven.
Moreover, at an opposite side to the thermal head beyond the thermal printing layer or the optical recording medium on which the thermal printing layer is provided, a back-up roller is preferably provided. The back-up roller is a roller supporting the thermal printing layer from the backside against a pressing force from the surface induced by the thermal head. When the back-up roller is provided, the pressing force is made even and a high-quality printed image having a print concentration with little unevenness can be obtained. Thus, it is particularly suitable in the case where printing is performed on the above disk shaped thermal printing layer.

The apparatus to be used in thermal printing is not limited and various types of known thermal printing apparatus can be applied.
Moreover, when a thermal head is installed into an optical recording apparatus, it becomes possible to perform recording and/or reading with a light onto the recording/reading functional layer and printing (printmaking) with heat onto the thermal printing layer within the same apparatus. Furthermore, it is also possible to perform these different movements at the same time. The optical recording medium of the invention can be used in the case where it is applied to such an apparatus.

The printing on the printing layer with a thermal head has an advantage that a necessary space may be small in the apparatus as compared with the printing by an inkjet and further an advantage that consumption articles such as ink cartridges are not generated. Moreover, there is an advantage that the printing can be performed within a short time as compared with the printing on the printing layer with a laser light. Furthermore, in the case of the printing on the printing layer with a laser light, it is unrealistic in view of space to provide individual laser-irradiating parts at both sides with respect to the medium. Therefore, the laser-irradiating part is provided at one side with respect to the medium. In that case, not only it is impossible to achieve recording on the printing layer and recording on the recording/reading functional layer present at the backside of the printing layer at the same time but also the optical recording medium should be inverted.
As above, the optical recording medium of the invention can provide, for example, an optical recording medium to be suitably used in a DVD recorder and the like into which a thermal head is installed.

### Examples

The following will explain the invention further specifically with reference to Examples. The invention is not limited to the following Examples unless it departs from the gist.

### (Example 1)

First, a coating liquid (A) having a composition shown bellow was prepared and the coating liquid was screen-printed on a label side of a commercially available DVD-R disk by mean of a calendered #460-27 screen. The label side is a white layer capable of inkjet printing. Then, it was cured by irradiation with an ultraviolet ray (600 mJ/cm²). Thus, a color former layer having a thickness of 5 µm was obtained.

### (Coaling liquid (A))

Curable resin: 30 g of epoxy acrylate
Photopolymerization initiator: 3 g of Irgacure^{®} 1300 (a light cleavage type, manufactured by Ciba Specialty Chemicals Inc)
Heat-sensitive color development material: 18 g of BK 500 (3-ethyl(ethoxypropyl)-6-methyl-7-anilinofluoran Sensitizer: 12 g of 2-benzyloxynaphthalene (benzyl 2-naphthyl ether)

Then, a coating liquid (B) having a composition shown below was prepared. The coating liquid was screen-printed on the above color former layer in piles by means of the above screen. Then, it was cured by irradiation with an ultraviolet ray (600 mJ/cm²). Thugs, a developer layer having a thickness of 5 µm was laminated.

### (Coating liquid (B))

Curable resin: 36 g of epoxy acrylate
Photopolymerization initiator: 3 g of Irgacure^{®} 1300 (light cleavage type, manufactured by Ciba Specialty Chemicals Inc.)
Developer: 24 g of bisphenol S (bis(4-hydroxyphenyl) sulfone)

### (Evaluation of stability of thermal printing layer)

After the DVD-R provided with the thermal printing layer thus obtained was maintained at normal temperature and under normal humidity, an occurrence of color change in the thermal printing layer was confirmed. As a result, there was observed no color development through the contact of the heat-sensitive color development material with the developer and thus it was stable, which was ranked as B on the basis of the following evaluation criteria. The results are shown in Table 1.
A: no color change was observed
B: color change was only a little and it was a non-problematic level
C: obvious color change was observed

### (Evaluation of color development property)

Thermal printing was performed on the above thermal printing layer by means of a printer (RIMAGE^{®} Perfect Image MODEL: CDPR11, CDPR) manufactured by RIMAGE Corporation. The thermal printing was performed so that the thermal head came into direct contact with the thermal printing layer with removing an ink ribbon. As a result, the thermal printing layer was colored black by recording with the thermal head, which was ranked as A on the basis of the following evaluation criteria. The results are shown in Table 1.
A: it was colored black
B: it was colored black but the degree of color development was poor as compared with the case of A
C: no color development was observed

### (Evaluation of stability at color-developed part)

Even when the thermal printing layer was allowed to stand at 60°C/50% RH for 24 hours, color at the above color-developed part did not disappear and a good stability of the color-developed part was confirmed, which was ranked as A on the basis of the following evaluation criteria. The results are shown in Table 1.
A: no color disappearance at color-developed part was observed.
B: color development at color-developed part was slightly poor
C: color development at color-developed part remarkably decreased
D: the color-developed part disappeared

### (Example 2)

An ultraviolet curable resin solution (C) having a composition shown below was prepared and this was screen-printed on a label side by means of a calendered #460-27 screen. Then, it was cured by irradiation with an ultraviolet ray (600 mJ/cm) to obtain a color former layer having a thickness of 5 µm.

### (Ultraviolet curable resin solution (C))

Curable resin: 36 g of epoxy acrylate
Photopolymerization initiator: 3 g of Irgacure^{®} 1300 (light cleavage type, manufactured by Ciba Specialty Chemicals Inc)
Heat-sensitive color development material: 24 g of 3K 500 (aforementioned fluoran compound)

Then, an ultraviolet curable resin solution (D) having a composition shown below was prepared. The solution was screen-printed on the above coating layer in piles by means of the above screen. Then, it was cured by irradiation with an ultraviolet ray to laminate a developer layer having a thickness of 5 µm.

### (Ultraviolet curable resin solution (D))

Curable resin: 30 g of epoxy acrylate
Photopolymerization initiator: 3 g of Irgacure^{®} 1300 (light cleavage type, manufactured by Ciba Specialty Chemicals Inc.)
Developer: 18 g of bisphenol S (bis(4-hydroxyphenyl) sulfone)
Sensitizer: 12 g of 2-benzyloxynaphthalene (benzyl 2-naphthyl ether)

The thermal printing layer thus prepared was evaluated in the same manner as in Example 1. As a result, it was stable even when allowed to stand at normal temperature and under normal humidity and was colored black by the heat-sensitive head, which is the same as Example 1. The colored part showed good stability even after allowed to stand at 60°C/50% RH for 24 hours. The results are shown in Table 1.

### (Example 3)

The ultraviolet curable resin solution (C) used in Example 2 was screen-printed on the label side of a commercially available DVD-R disk by means of a calendered #460-27 screen. Then, the solution was cured by irradiation with an ultraviolet ray to obtain a color former layer having a thickness of 5 µm. Thereafter, an ultraviolet curable resin solution (E) having a composition shown below was screen-printed thereon by means of the above screen. Then, it was cured by irradiation with an ultraviolet ray to laminate a sensitizer layer having a thickness of 5 µm.

### (Ultraviolet curable resin solution (E))

Curable resin: 36 g of epoxy acrylate
Photopolymerization initiator: 3 g of Irgacure^{®} 1300 (light cleavage type, manufactured by Ciba Specialty Chemicals Inc)
Sensitizer: 24 g of 2-benzyloxynaphthalene (benzyl 2-naphthyl ether)

Then, the ultraviolet curable resin solution (B) used in Example 1 was screen-printed on the above developer layer by means of the above screen. Then, it was cured by irradiation with an ultraviolet ray to laminate a developer layer having a thickness of 5 µm.
The thermal printing layer thus obtained was evaluated in the same manner as in Example 1. As a result, the stability at normal temperature and under normal humidity was excellent as compared with the cases of Examples 1 and 2. With regard to the color development property and the stability of the color-developed part, there was a tendency that slightly poor results were observed as compared with the cases of Examples 1 and 2. The results are shown in Table 1.

### (Comparative Example 1)

When an ultraviolet curable resin solution (F) having a composition shown below was prepared, it was colored black in the state that the coating liquid was prepared.

### (Ultraviolet curable resin solution (F))

Curable resin: 25 g of epoxy acrylate
Photopolymerization initiator: 3 g of Irgacure^{®}1300 (light cleavage type, manufactured by Ciba Specialty Chemicals Inc.)
Heat-sensitive color development material: 10 g of BK 500 (aforementioned fluoran compound)
Developer: 7.5 g of bisphenol S (bis(4-hydroxyphenyl) sulfone)
Sensitizer: 5 g of 2-benzyloxynaphthalene (benzyl 2-naphthyl ether)

### (Comparative Example 2)

An ultraviolet curable resin solution (G) having a composition shown below was prepared and this was screen-printed on a label side by means of a calendared #460-27 screen. Then, it was cured by irradiation with an ultraviolet ray (600 mJ/cm²) to obtain a layer having a thickness of 5 µm.

### (Ultraviolet curable resin solution (G))

Curable resin: 25 g of epoxy acrylate
Photopolymerization initiator: 3 g of Irgacure^{®} 1300 (light cleavage type, manufactured by Ciba Specialty Chemicals Inc.)
Heat-sensitive color development material: 10 g of BK 500 (aforementioned fluoran compound)
Developer: 7.5 g of D-8 (4-hydroxyl-4'-(isopropyloxy)diphenyl sulfone)
Sensitize: 5 g of 2-benzyloxynaphthalene (benzyl 2-naphthyl ether)

The thermal printing layer thus obtained was evaluated in the same manner as in Example 1. As a result, the stability of the thermal printing layer was equal to the case of Example 1. Moreover, it was colored black by recording with the heat-sensitive head (color development property was equal to the result in Example 3). However, the stability of the color-developed part was bad and, when it was allowed to stand at 60°C/50% RH for 24 hours, the color-developed part disappeared. The results are shown in Table 1.

### (Comparative Example 3)

An ultraviolet curable resin solution (G) having a composition shown below was prepared and this was screen-printed on a label side by means of a calendered #460-27 screen. Then, it was cured by irradiation with an ultraviolet ray (600 mJ/cm²) to obtain a layer having a thickness of 5 µm.

### (Ultraviolet curable resin solution (G))

Curable resin: 25 g of epoxy acrylate
Photopolymerization initiator: 3 g of Irgacure^{®} 1300 (light cleavage type, manufactured by Ciba Specialty Chemicals Inc.)
Heat-sensitive color development material: 10 g of BK 500 (aforementioned fluoran compound)
Developer: 7.5 g of Tramic KN^{®} (4-hydroxy-phenyl (4'- (n-propoxyphenyl) sulfone)
Sensitizer : 5 g of 2-enzyloxynaphthalene (benzyl 2-naphthyl ether)

The thermal printing layer thus obtained was evaluated in the same manner as in Example 1. As a result, the stability of the thermal printing layer was equal to the case of Example 1. Moreover, it was colored black by recording with the heat-sensitive head (color development property was equal to the result in Example 3). However, the stability of the color-developed part was bad and, when it was allowed to stand at 60°C/50% RH for 24 hours, the color-developed part disappeared. The results are shown in Table 1.

In this connection, in Comparative Examples 2 and 3, a developer having a low reactivity with the heat-sensitive color development material was used. However, the stability under the environment of 60°C/50% RH was insufficient.

**[Table 1]**

| | Layer | BK 500 | Benzyl 2-naphthyl ether | Bis-phenol S | D- 8 | Tramic KN | Stability of thermal printing layer | Color-development property | Stability of color developed part |
|---|---|---|---|---|---|---|---|---|---|
| Example 1 | upper | - | - | ○ | - | - | B | A | A |
| | lower | ○ | ○ | - | - | - | | | |
| Example 2 | upper | - | ○ | ○ | - | - | B | A | A |
| | lower | ○ | - | - | - | - | | | |
| Example 3 | upper | - | - | ○ | - | - | A | B | B |
| | middle | - | ○ | - | - | - | | | |
| | lower | ○ | - | - | - | - | | | |
| Comp. Example 1 | mono | ○ | ○ | ○ | - | - | - | - | - |
| Comp. Example 2 | mono | ○ | ○ | - | ○ | - | B | B | D |
| Comp. Example 3 | mono | ○ | ○ | - | - | ○ | B | B | D |

### (Example 4)

A thermal printing layer was formed in the same manner as in Example 1 except that the film thickness of the developer layer was 10 µm or 15 µm. The adjustment of the film thickness was performed by applying the developer layer having a thickness of 5 µm in Example 1 in piles. Specifically, the developer layer having a film thickness of 10 µm was formed by applying the developer layer having a thickness of 5 µm using the coating liquid (B) and curing it and subsequently again applying the developer layer having a thickness of 5 µm using the coating liquid (B) and curing it. The developer layer having a film thickness of 15 µm was formed by applying the developer layer having a thickness of 5 µm using the coating liquid (B) and curing it, subsequently again applying the developer layer having a thickness of 5 µm using the coating liquid (B) and curing it, and further, once again, applying the developer layer having a thickness of 5 µm using the coating liquid (B) and curing it.

Each of the thermal printing layers obtained as above was subjected to thermal printing under the same conditions as in Example 1. FIG. 2 is a figure showing results of the thermal printing. As shown in FIG. 2, with the increase in the film thickness of the developer layer from 5 µm (Example 1) to 10 µm, further 15 mm, it is revealed that a concentration of the black printing (color-developed part) decreases.
In this connection, as shown in FIG. 2, the color development (concentration) at the color-developed part is uneven. This is due to unevenness of the surface of the thermal printing layer (developer layer), which is attributable to unevenness of DVD-R surface before the application of the thermal printing layer. When the surface unevenness is reduced to improve the surface property, it is expected that the uniformity of the above color development would be more improved.

Moreover, when an excellence in the stability of the color-developed part was observed by allowing the thermal printing layer to stand at 60°C/50% RH for 24 hours, there was obtained a result that the stability of the color-developed part decreased with the increase in the film thickness of the developer layer from 5 µm to 10 µm, further 15 µm. However, it is considered that the result does not show the fact that the stability of the color-developed part is poor by increasing the thick of the developer layer but it is considered to be attributable to the difference in initial concentration of the color development. Namely, it is presumed that initial concentration of the color development decreases as the film thickness of the developer layer increases and hence the decrease in concentration after standing becomes marked. In all the thermal printing layers, it was not observed that the color of the color-developed part completely disappeared.

Incidentally, when recording/reading was performed using a commercially available DVD recorder on the DVD-R on which the thermal printing layer was provided, which were obtained in Examples 1 to 4, optical information recording was satisfactorily achieved.
The present application is based on Japanese Patent Application No. 2006-111818 filed on April 14, 2006.

The present invention can provide an optical recording medium as defined in annexed claim 1, wherein the thermal printing layer is capable of free material selection without considering solubility of a heat-sensitive color development material such as a leuco dye and a developer to a curable resin (particularly, ultraviolet curable resin) and materials thereof and can provide an optical recording medium as defined in annexed claim 1, wherein the thermal printing layer is suitable for not thermal printing with a laser light but thermal printing with a thermal head.

## Claims

1. An optical recording medium comprising a thermal printing layer capable of thermal printing with a thermal head and a recording/reading functional layer [1] for performing recording or reading with a light,
wherein the thermal printing layer comprises a color formes layer [2] comprising a heat-sensitive color development material and a curable resin and a developer layer [3] comprising a developer and a curable resin and
wherein the optical recording medium has the thermal printing layer on a side of the recording/reading functional layer [1] in which the side is opposite to a side on which the light enters.

2. The optical recording medium according to claim 1, wherein the thermal printing layer comprises a sensitizer layer [4] comprising a sensitizer between the color former layer [2] and the developer layer [3].

3. The optical recording medium according to claim 1 or 2, where a sensitizer is contained in at least one of the color former layer [2] and the developer layer [3].

4. The optical recording medium according to any one of claims 1 to 3, wherein the curable resin contained in the color former layer [2] and the curable resin contained in the developer layer [3] are the same curable resin.

5. The optical recording medium according to any one of claims 1 to 4, wherein the curable resin is an ultraviolet curable resin.

## Patentansprüche

1. Ein optisches Aufzeichnungsmedium, umfassend eine Thermodruckschicht, die zum Thermodruck mit einem Thermodruckkopf in der Lage ist, und eine funktionelle Aufzeichnungs-/Leseschicht [1] zum Durchführen von Aufzeichnung oder Lesen mit einem Licht,
wobei die Thermodruckschicht eine ein wärmeempfindliches Farbentwicklungsmaterial und ein härtbares Harz umfassende farbbildende Schicht [2] und eine einen Entwickler und ein härtbares Harz umfassende Entwicklerschicht [3] umfasst, und
wobei das optische Aufzeichnungsmedium die Thermodruckschicht auf einer Seite der funktionellen Aufzeichnungs-/Leseschicht [1] aufweist, wobei die Seite einer Seite, auf der das Licht einfällt, gegenüberliegt.

2. Das optische Aufzeichungsmedium nach Anspruch 1, wobei die Thermodruckschicht eine Sensibilisatorschicht [4] umfasst, die einen Sensibilisator zwischen der farbbildenden Schicht [2] und der Entwicklerschicht [3] umfasst.

3. Das optische Aufzeichnungsmedium nach Anspruch 1 oder 2, wobei ein Sensibilisator in mindestens einer der farbbildenden Schicht [2] und der Entwicklerschicht [3] enthalten ist.

4. Das optische Aufzeichnungsmedium nach einem der Ansprüche 1 bis 3, wobei das in der farbbildenden Schicht [2] enthaltene härtbare Harz und das in der Entwicklerschicht [3] enthaltene härtbare Harz das gleiche härtbare Harz sind.

5. Das optische Aufzeichnungsmedium nach einem der Ansprüche 1 bis 4, wobei das härtbare Harz ein UV-härtbares Harz ist.

## Revendications

1. Support d'enregistrement optique comprenant une couche d'impression thermique capable d'impression thermique avec une tête thermique et une couche fonctionnelle d'enregistrement/de lecture [1] pour réaliser un enregistrement ou une lecture avec une lumière,
dans lequel la couche d'impression thermique comprend une couche de formeur de couleur [2] comprenant un matériau de développement de couleur thermosensible et une résine durcissable et une couche de développateur [3] comprenant un développateur et une résine durcissable et
dans lequel le support d'enregistrement optique a la couche d'impression thermique sur un côté de la couche fonctionnelle d'enregistrement/de lecture [1] dans laquelle le côté est à l'opposé d'un côté sur lequel entre la lumière.

2. Support d'enregistrement optique selon la revendication 1, dans lequel la couche d'impression thermique comprend une couche de sensibilisateur [4] comprenant un sensibilisateur entre la couche de formeur de couleur [2] et la couche de développateur [3].

3. Support d'enregistrement optique selon la revendication 1 ou 2, dans lequel un sensibilisateur est contenu dans au moins l'une de la couche de formeur de couleur [2] et de la couche de développateur [3].

4. Support d'enregistrement optique selon l'une quelconque des revendications 1 à 3, dans lequel la résine durcissable contenue dans la couche de formeur de couleur [2] et la résine durcissable contenue dans la couche de développateur [3] sont la même résine durcissable.

5. Support d'enregistrement optique selon l'une quelconque des revendications 1 à 4, dans lequel la résine durcissable est une résine durcissable aux ultraviolets.
